# EUROPÄISCHE PATENTANMELDUNG

(11) **EP 1 086 642 A1**
(43) Veröffentlichungstag der Anmeldung: **28.03.2001**
(21) Anmeldenummer: 00119217.8
(22) Anmeldetag: 06.09.2000
(51) Int. Cl.: A47J 31/54, A47J 31/46, A47J 31/36, A47J 31/44

(54) **Dampferzeugungseinrichtung zum Aufwärmen und/oder Aufschäumen von Flüssigkeiten, inbesondere Milch und Verfahren hierzu**

(30) Priorität: 24.09.1999 DE 19945977
(71) Anmelder: Braun GmbH, 61476 Kronberg (DE)
(72) Erfinder: Müller, Roland, 63303 Dreieich (DE); Klawuhn, Manfred, 60322 Frankfurt am Main (DE); Zils, Jürgen W., 61476 Kronberg (DE)

(57) **Zusammenfassung**

Die Dampferzeugungseinrichtung (1) dient zum Aufwärmen und/oder Aufschäumen von Flüssigkeiten, insbesondere Milch. Sie weist eine von einer Wasserquelle (2) mit Wasser gespeiste elektrisch angetriebene Pumpe (3) auf, von der über eine Leitung (13) dosiert Wasser einem von einer elektrisch betriebenen Heizung (22) beheizten Durchlauferhitzer (6) zugeführt wird. Der Durchlauferhitzer (6) erhitzt in seinem Dampfrohr (18) das ankommende Wasser zu Dampf, welches anschließend einer Dampfentnahmestelle, vorzugsweise einer Dampfdüse (7), zugeführt wird, wo der Dampf unter Druck austritt. Nach der Erfindung ist in der Leitung (13) zwischen der Pumpe (3) und dem Durchlauferhitzer (6) ein eine bestimmte Menge an Wasser speichernder Zwischentank (5) mit einer Kammer (53) ausgebildet. Beim Einschalten der Dampferzeugungseinrichtung (1) wird die Pumpe (3) gleichzeitig mit der Heizung (22) eingeschaltet, wobei nach dem Einschalten das von der Pumpe (3) geförderte Wasser in die Kammer (53) des Zwischentanks (5) einfließt und dort so lange zurückgehalten und erst dann an den Durchlauferhitzer (6) abgegeben wird, bis der Durchlauferhitzer (6) eine Temperatur erreicht hat, die ausreicht, Wasser zu verdampfen. Durch die erfindungsgemäße Ausbildung werden aufwendige Verzögerungszeitschaltglieder, die zum verzögerten Einschalten der Pumpe (3) führen und die einen erhöhten Bedienungsaufwand des Gerätesverursachen, vermieden.

## Beschreibung

Die Erfindungen betreffen eine Dampferzeugungseinrichtung zum Aufwärmen und/oder Aufschäumen von Flüssigkeiten, insbesondere Milch sowie ein Verfahren hierzu nach den Oberbegriffen der Patentansprüche 1 und 7.

Eine derartige Dampferzeugungseinrichtung ist beispielsweise aus der EP 0 781 520 A1 bekannt. In der Cappuccino-Stellung, also in der Stellung, in der Dampf zum Aufschäumen von Milch gewünscht wird, befinden sich die Schalter S1 und S2 in derjenigen Stellung, in der der Rohrheizkörper des Durchlauferhitzers mit Strom versorgt wird. Gleichzeitig wird über den Eingang die elektrische Steuereinrichtung derart geschaltet, daß der Elektromotor die Kolbenpumpe antreibt und Wasser in das Wasserrohr des Durchlauferhitzers pumpt, wo es verdampft und über die Ausgangsleitung der Dampfdüse zugeführt wird. In der Dampfdüse wird der Dampf beschleunigt und tritt dann am Ende der Dampfdüse aus (Figuren 1 und 2 der EP 0 781 520 A1).

In dem Moment, in dem also die Pumpe Wasser zu fördern beginnt, beginnt zum selben Zeitpunkt auch die Heizeinrichtung den Wassererhitzer zu erhitzen. Dies führt dazu, daß der Wassererhitzer noch nicht so heiß ist, daß er das aufzunehmende Wasservolumen vollständig verdampfen kann. Dies führt letztendlich dazu, daß an der Dampfdüse heißes Wasser oder ein heißes Dampfwassergemisch austritt. Dies beeinträchtigt die Qualität des Aufschäumergebnisses.

Weiterhin ist es bei Espressomaschinen bekannt, daß erst nach Einschalten der Espressomaschine eine Wartezeit nötig ist, bis der Durchlauferhitzer seine für ein Erzeugen von Dampf erforderliche Betriebstemperatur erreicht hat, damit nur Dampf an der Düse austritt. Hierzu benötigt man eine Signaleinrichtung, die anzeigt, wann mit dem Aufschäumen begonnen werden kann. Dies führt zu verlängerten Wartezeiten und Gebrauchsnachteilen des Gerätes.

Aufgabe der Erfindung ist es nun, eine Dampferzeugungseinrichtung zum Aufwärmen und/oder Aufschäumen von Flüssigkeiten, insbesondere Milch, für eine Brühgetränkezubereitungsmaschine zu schaffen, die mit besonders einfachen Mitteln in schnellstmöglicher Zeit Dampf erzeugt. Gleichzeitig soll hierzu ein Verfahren geschaffen werden, bei dem mit ebenso besonders einfachen Mitteln die Dampferzeugung nach Einschalten des Gerätes automatisch geregelt wird.

Die erste Aufgabe wird erfindungsgemäß durch die kennzeichnenden Merkmale des Patentanspruchs 1 gelöst. Dadurch, daß zwischen Pumpe und Dampfrohr des Durchlauferhitzers ein Zwischentank mit einer Überlaufkammer ausgebildet ist, der im System eine Art Puffer zur Zwischenlagerung von Wasser oder ein Verzögerungszeitglied darstellt, wird mit besonders einfachen Mitteln erreicht, daß erst dann, wenn der Durchlauferhitzer seine Betriebstemperatur erreicht hat, Wasser aus dem Auslauf des Zwischentanks ausfließt und in den Durchlauferhitzer gelangt. Dabei müssen die Förderleistung der Pumpe, die Heizleistung des Durchlauferhitzers und das Speichervolumen des Zwischentanks so aufeinander abgestimmt sein, daß erst dann Wasser in den Durchlauferhitzer gelangt, wenn dieser die zur Dampferzeugung erforderliche Betriebstemperatur erreicht hat. Mit der Erfindung können also dann aufwendige Verzögerungszeitschaltglieder entfallen, da nach der Erfindung beim Einschalten der Dampferzeugungseinrichtung gleichzeitig die Pumpe und die Heizeinrichtung des Durchlauferhitzers eingeschaltet werden und der Zwischentank so lange das geförderte Wasser aufstaut, bis der Durchlauferhitzer seine für die Dampferzeugung erforderliche Betriebstemperatur erreicht hat.

Anstelle eines Zwischentanks kann auch ein längeres Schlauchstück gewählt werden, das die von der Pumpe geförderten Wassermengen so lange aufnimmt, bis der Durchlauferhitzer seine Betriebstemperatur erreicht hat. Auch hier wäre es von Vorteil, wenn das schlauchseitige Ende zum Durchlauferhitzer gegenüber dem Einlauf erhöht angeordnet wäre, damit nicht allzu schnell Wasser in den Durchlauferhitzer gelangt. Der Schlauch arbeitet auch hier als eine Art Überlaufkammer.

Durch die Merkmale des Patentanspruchs 2 kann die Überlaufkammer in einem Ausführungsbeispiel in ihrer Längsrichtung im wesentlichen horizontal verlaufen und durch eine senkrechte Wand vom Auslauf derart getrennt sein, daß erst dann, wenn die Überlaufkammer mit Wasser gefüllt ist, das überschüssige Wasser über die Wand herüberläuft und in den Auslauf des Zwischentanks und so in das Dampfrohr einfließt. Bei dieser Ausführungform können Ein- und Auslauf auf gleicher oder unterschiedlicher Höhe ausgebildet sein. Verläuft hingegen in einem anderen Ausführungsbeispiel der Zwischentank in seiner Längsrichtung senkrecht, so muß der Auslauf in derjenigen Höhe an der Kammer ausgebildet sein, in der das gebildete Kammervolumen ausreicht, so viel Wasser aufzunehmen, daß gerade bei Beginn des Überlaufens die Heizeinrichtung ihre Betriebstemperatur erreicht hat.

Es ist denkbar, daß der Einlauf oberhalb des Auslaufs am Zwischentank angeordnet ist, d.h., der eigentliche Zwischentank befindet sich unterhalb des Einlaufs und auch unterhalb des Auslaufs. In einer anderen Variante, in welcher der Einlauf am Boden des Zwischentanks ausgebildet ist, befindet sich der eigentliche Zwischentank oberhalb des Einlaufs. Dabei befindet sich auch der Auslauf in Längsrichtung des Zwischentanks oberhalb des Einlaufs (Anspruch 3).

Nach den Merkmalen des Patentanspruchs 4 weist der Zwischentank einen Auslaß auf, der mit einem Überdruckventil versehen ist, das bei unzulässigem Überdruck im Zwischentank öffnet und Dampf oder Wasser zur Atmosphäre hin freigibt. Auf diese Weise werden unzulässig hohe Drücke im Zwischentank vermieden, die zu einer Explosion oder Undichtigkeit des Zwischentanks oder der Teile des gesamten Wasser-Dampfsystems führen könnten.

Nach den Merkmalen des Patentanspruchs 5 schließt sich an den Zwischentank ein Druckraum an, in dem ein gegen die Kraft einer Feder verschiebbarer Kolben geführt wird, der in der Schließstellung den Auslaß zur Atmosphäre hin versperrt und in der Offenstellung den Druckraum mit dem Auslaß freigibt. Ein derartiges Überdruckventil ist besonders leicht herstellbar und kann in den sich an den Zwischentank direkt anschließenden Druckraum besonders einfach integriert werden. Dabei bilden der Druckraum und der Zwischentank vorteilhaft einen Raum, der von einer zylindrischen Bohrung gebildet wird. Dieser Raum läßt sich besonders einfach herstellen.

Nach den Merkmalen des Patentanspruchs 6 weist der Kolben an seiner dem Zwischentank zugewandten Seite eine Vertiefung in Form eines Hohlraums auf. Diese Vertiefung dient als Druckpolster und gleichzeitig als Dampfspeicher. Das Druckpolster, bestehend aus einem Dampf-Luftgemisch dient dazu, daß, wenn Pumpe und Durchlauferhitzer abgeschaltet werden, der in den Zwischentank zurückströmende Dampf nicht sofort in dem kalten Wasser kondensiert.

Durch die Merkmale des Patentanspruchs 7 wird ein Verfahren zur Dampferzeugung einer Dampferzeugungseinrichtung geschaffen, bei dem nach Einschalten des Gerätes sich sowohl die Pumpe wie der Durchlauferhitzer einschaltet. Das von der Pumpe geförderte Wasser wird nun zunächst dem als Überlauftank ausgebildeten Zwischentank zugeführt und dort so lange gespeichert, bis der Durchlauferhitzer seine für Dampf erforderliche Betriebstemperatur erreicht hat. Dabei ist die Förderleistung der Pumpe und das Speichervolumen des Zwischentanks derart auf dei Heizleistung des Durchlauferhitzers abgestimmt, daß erst Wasser in das Dampfrohr einströmt, wenn der Durchlauferhitzer bzw. das Dampfrohr seine zum Erzeugen von Dampf erforderliche Temperatur erreicht hat. Durch das erfindungsgemäße Verfahren wird zeitverzögert nach Einschalten des Gerätes ausschließlich nur Dampf erzeugt, der an der Dampfentnahmestelle, vorzugsweise an der Dampfdüse austritt. Das erfindungsgemäße Verfahren braucht keine aufwendigen elektronischen Zeitschaltglieder oder sonstige elektronische Erfassungseinrichtungen, die einer Bedienungsperson anzeigen, wann der Durchlauferhitzer seine Betriebstemperatur erreicht hat und erst dann das Gerät die Pumpe einschaltet bzw. von Hand eingeschaltet werden kann.

Durch die Merkmale des Patentanspruchs 8 wird ein Verfahren bereitgestellt, das es erlaubt, nach jedem Dampferzeugungsprozeß den Zwischentank zu entleeren, damit für den nächsten Gebrauch der Zwischentank in seiner Funktion wieder erneut zu Verfügung steht.

Ein Ausführungsbeispiel der Erfindung ist in der Zeichnung dargestellt und wird im folgenden näher erläutert. Es zeigen:
- Fig. 1: einen schematischen Aufbau einer Dampferzeugungseinrichtung nach der Erfindung,
- Fig. 2: einen Längsschnitt durch den oberen Teil des Zwischentanks, bei dem das Überdruckventil seine geschlossene Stellung aufweist und
- Fig. 3: einen Längsschnitt durch den oberen Teil des Zwischentanks, wie in Fig. 2, allerdings hat hier das Überdruckventil seine Offenstellung bei überhöhtem Druck im Druckraum erreicht.

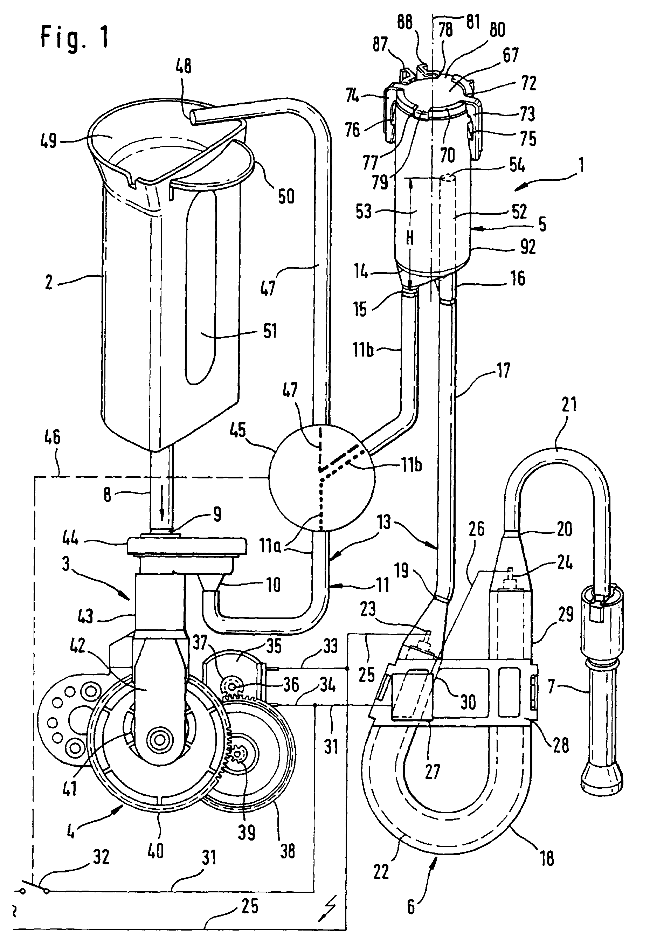

In Fig. 1 ist eine Dampferzeugungseinrichtung 1 dargestellt, die im wesentlichen aus einem vorzugsweise nur für die Dampferzeugung verwendeten Wassertank 2, einer vorzugsweise als Kolbenpumpe ausgebildeten Pumpe 3 mit einem Getriebe 4, einem Zwischentank 5, einem Durchlauferhitzer 6 und einer Dampfdüse 7 besteht. Der Wassertank 2 ist über eine Wasserleitung 8 mit dem Eingangsanschluß 9 der Pumpe 3 verbunden. Der Ausgangsanschluß 10 ist über einen ersten Abschnitt 11 der Leitung 13, die die Pumpe 3 mit dem Dampfrohr 18 des Durchlauferhitzers 6 verbindet, mit dem am Boden 14 des Zwischentanks 5 ausgebildeten Einlaß 15 verbunden.

Wie aus den Figuren 1 bis 3 ersichtlich ist, ragt neben dem Einlaß 15 ein Auslaß 16 aus dem Boden 14 nach unten heraus, der über den zweiten Abschnitt 17 der Leitung 13 mit dem Dampfeingang 19 des Dampfrohres 18 des Durchlauferhitzers 6 verbunden ist. Der Dampfausgang 20 ist über die Dampfleitung 21 mit der am Ende der Dampfleitung 21 lösbar befestigten und gedichteten Dampfdüse 7 verbunden. Auf die Dampfdüse 7 wird hier nicht näher eingegangen, da sie bereits vielfach in ihrer Funktionsweise und ihrem Aufbau in der Patentliteratur, so wie sie beispielsweise in der DE 43 27 085.9-16 beschrieben ist, bekannt.

Da die in Fig. 1 dargestellte Dampferzeugungseinrichtung 1 nur die hierfür erforderlichen Bauteile zeigt, ist nicht dargestellt, wie sie in einem Gehäuse einer Brühgetränkezubereitungsmaschine (nicht dargestellt) eingesetzt werden kann. So wird der Durchlauferhitzer 6 in einer Getränkezubereitungsmaschine nicht - wie hier dargestellt - senkrecht, sondern horizontal eingebaut sein, damit das Wasser nicht gleich zur Mitte des Dampfrohres 18 fließt, sondern langsam in den Dampfeingang 19 strömt, um sich bereits zu Anfang im Dampfrohr 18 zu erwärmen. An dieser Stelle wird noch erwähnt, daß nach Fig. 1 der Heizstab 22 des Durchlauferhitzers 6 unterhalb des Dampfrohres 18 ausgebildet und an diesem verlötet, geschweißt oder sonst wie gut wärmeleitend befestigt ist, damit die vom Heizstab 22 ausgehende Wärme möglichst gleichmäßig von unten her in das Dampfrohr 18 einfließt.

Der Heizstab 22 weist nach Fig. 1 an seinen Enden Kontaktfahnen 23, 24 auf, die mit elektrischen Leitungen 25, 26 verbunden sind. Die elektrische Leitung 26 ist mit einem Temperaturschalter 27 verbunden, der auf einem an dem Durchlauferhitzer 6 angeordneten Quersteg 28 befestigt ist. Da der Durchlauferhitzer im wesentlichen U-förmig ausgebildet ist - andere Ausgestaltungen wie ein Thermoblock oder kesselähnliches Gebilde sind ebenfalls möglich -, verbindet der Quersteg 28 die beiden Schenkel 29, 30 des Durchlauferhitzers 6 und bildet einen Träger für den Durchlauferhitzer 6 selbst. Der Quersteg 28 ist vorzugsweise an den beiden Schenkeln 29, 30 angelötet oder angeschweißt.

Nach Fig. 1 ist der Temperaturschalter 27 über eine elektrische Eingangsleitung 31 mit einem die Dampferzeugungseinrichtung 1 ein- bzw. ausschaltenden elektrischen Schalter 32 verbunden. Die Kontaktfahne 23 des Heizstabes 22 ist über die elektrische Leitung 25 mit dem Minuspol des elektrischen Schalters 32 verbunden. Parallel zu den Leitungen 25, 31 ist über die elektrischen Leitungen 33, 34 der Elektromotor 35 mit dem elektrischen Schalter 32 verbunden, so daß beim Einschalten des Schalters 32 sowohl der Elektromotor 35 wie die Heizung 22 des Durchlauferhitzers 6 mit elektrischer Energie versorgt werden.

Nach Fig. 1 ist die Antriebswelle 36 des Elektromotors 35 mit einem ersten Zahnrad 37 drehfest verbunden, das ein zweites Zahnrad 38 größeren Durchmessers antreibt. Im Zentrum des zweiten Zahnrades 38 ist wiederum ein drittes Zahnrad 39 kleineren Durchmessers drehfest befestigt, das seinerseits ein viertes Zahnrad 40 größeren Durchmessers antreibt, auf dem exzentrisch eine Lagerstelle 41 ausgebildet ist, über die eine Pleuelstange 42 in Hubbewegung gesetzt wird, die an ihrem Ende einen in der Zeichnung nicht dargestellten Kolben trägt. Der Kolben wird in einer Bohrung (nicht dargestellt) des Kolbengehäuses 43 geführt. Oberhalb des Kolbengehäuses 43 schließt sich ein Ventilgehäuse 44 an, in dem, wie bei Kolbenpumpen üblich, ein Saug- und Druckventil (nicht dargestellt) ausgebildet sind. Auf diese Kolbenpumpe 3 mit Getriebeeinrichtung 4 wird an dieser Stelle nicht näher eingegangen, da derartige Anordnungen bereits bei der von der Anmelderin selbst vertriebenen Espressomaschine, wie diese eingangs erwähnt wurde, bekannt ist.

In Fig. 1 befindet sich im ersten Abschnitt 11 der Leitung 13 ein Zweiwegeventil 45, das hier nur annäherungsweise schematisch angedeutet wird. Das Zweiwegeventil 45 ist vorzugsweise mechanisch mit dem Schalter 32 verbunden, wie dies durch die gestrichelte Linie 46 in Fig. 1 angedeutet ist. Das Zweiwegeventil 45 teilt den ersten Abschnitt 11 der Leitung 13 in zwei Leitungsabschnitte 11a, 11b auf, wobei in der Ausstellung des Zweiwegeventils 45 der Leitungsabschnitt 11b über eine Entspannungsleitung 47 verbunden ist, deren Ende 48 in die Einfüllöffnung 49 des Wassertanks 2 mündet. Der Wassertank 2 weist an seinem oberen Bereich in Nähe der Einfüllöffnung 49 eine Handhabe 50 auf, die dazu dient, den Wassertank 2 aus der Dampferzeugungseinrichtung 1 zum Wassernachfüllen zu entnehmen, wobei allerdings der Ausgang (nicht dargestellt) des Wassertanks 2 über eine im Ausgang ausgebildete Ventileinrichung (nicht dargestellt) verschlossen werden muß, wenn der Auslaß von der Wasserleitung 8 getrennt wird. Um den Füllstand im Wassertank 2 besser erkennen zu können, ist an der Außenwand ein Fenster 51 ausgebildet.

Wie aus den Figuren 1 bis 3 hervorgeht, ragt der Auslaß 16 des Zwischentanks 5 über ein Rohr 52 in das Innere der Kammer 53 hinein. Das freie Ende, also der Kammerauslaß 54, des Rohres 52 ist in einer Höhe H gegenüber dem Einlaß 15 am Boden 14 des Zwischentanks 5 angeordnet, die dem Wasservolumen entspricht, das die Kammer 53 aufnehmen muß, bis sie über den Kammerauslaß 54 überläuft. Dieses Wasservolumen ist so groß bemessen, daß, wenn sowohl die Pumpe 3 wie die Heizung 22 des Durchlauferhitzers 6 eingeschaltet werden, die Kammer 53 gerade dann überläuft, wenn die Temperatur des Durchlauferhitzers 6 etwa so groß ist, daß in dem Dampfrohr 18 das überlaufende Wasser aus dem Zwischentank 5 ausreichend gut verdampft werden kann.

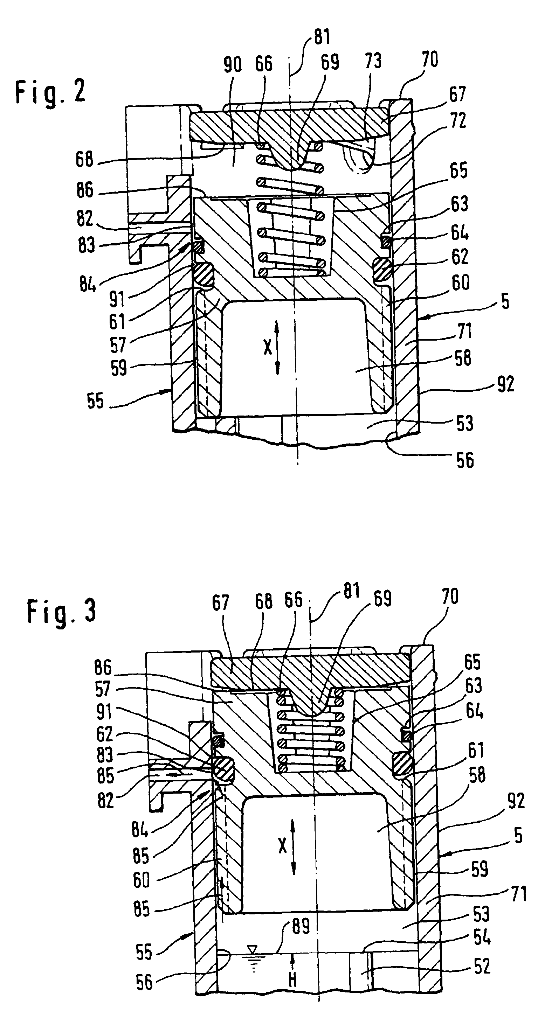

In den Figuren 2 und 3 besteht der Zwischentank 5 aus einem zylindrischen Gehäuse 55, in dessen im Querschnitt kreisförmigen Bohrung 56 oberhalb des Kammerauslasses 54 ein Ventilkolben 57 längs verschiebbar geführt ist. An dem der Kammer 53 zugewandten Ende ist ein als zylinderförmige Vertiefung ausgebildeter Hohlraum 58 angeordnet. An der Mantelfläche 59 des Ventilkolbens 57 sind am Umfang verteilte Längsnuten 60 angeordnet, die - ausgehend von der Kammer 53 - in eine im mittleren Bereich auf der Mantelfläche 59 des Ventilkolbens 57 ausgebildete erste Ringnut 61 einlaufen, In der ersten Ringnut 61 ist ein vorzugsweise als O-Ring ausgebildeter erster Dichtring 62 eingesetzt, der die Bohrung 56 gegenüber der ersten Ringnut 61, und so gegenüber dem Ventilkolben 57, dichtet. Auf diese Weise wird die Kammer 53 gegenüber dem mit der Atmosphäre verbundenen Raum 90 gebildet. An die erste Ringnut 61 schließt sich in den Figuren 2 und 3 nach oben eine zweite Ringnut 63 an, deren Breite aber kleiner ist als die Breite der ersten Ringnut 61. In der zweiten Ringnut 63 ist ebenfalls ein als O-Ring ausgebildeter zweiter Dichtring 64 eingesetzt, der wiederum die Bohrung 56 gegenüber der zweiten Ringnut 63 dichtet. Dieser zweite Dichtring 64 dichtet den Ringraum 91 zum Raum 90 hin.

Nach den Figuren 2 und 3 ist an den dem Hohlraum 58 gegenüberliegenden Ende des Ventilkolbens 57 eine Sacklochbohrung 65 angeordnet, in die eine als Druckfeder ausgebildete Spiralfeder 66 eingesetzt ist, die sich auf der anderen Seite an einem in der Bohrung 56 eingesetzten Deckel 67 abstützt. Der Deckel 67 ist an seiner Innenseite 68 mit einem zentral angeordneten Zapfen 69 versehen, den die Spiralfeder 66 mit seinem oberen Ende umgreift, so daß sie auf diese Weise in zentraler Stellung gehalten wird. Am oberen freien Ende 70 des zylindrischen Gehäuses 55 sind nach den Figuren 1 und 2 in der Wand 71 stirnseitig diametral gegenüberliegende Längsnuten 72 angebracht, die von am Deckel 67 ausgebildeten Haltearmen 73, 74 durchdrungen werden. Die Haltearme 73, 74 sind an der Außenfläche des zylindrischen Gehäuses 55 nach unten hin abgewinkelt und hintergreifen an der Mantelfläche 92 des zylindrischen Gehäuses 55 ausgebildete Rastnasen 75, 76, wie dies nur Fig. 1 zeigt. Auf diese Weise wird der Deckel 67 fest an dem zylindrischen Gehäuse 55 gehalten und verschließt die Bohrung 56 nach oben. Nach Fig. 1 sind am freien Ende 70, um 90° zu den Längsnuten 72 versetzt angeordnet, weitere Längsnuten 77, 78 ausgebildet, in die radial nach außen hervorstehende Vorsprünge 79, 80 eingreifen. Auf diese Weise ist der Deckel 67 drehfest und verkantungsfrei in der Bohrung 56 gehalten und kann so auf das Gehäuse 55 die Kraft der Spiralfeder 66 abstützen.

In den Figuren 1 bis 3 verläuft quer zur Längsachse 81 des Zwischentanks 5 ein im Gehäuse 55 als Bohrung ausgebildeter Auslaß 82, dessen Austrittsöffnung 83 mit dem ersten Dichtring 62 das eigentliche Überdruckventil 84 bildet. In der in Fig. 2 dargestellten Stellung des Überdruckventils 84 liegen sowohl der erste Dichtring 62 wie der zweite Dichtring 64 unterhalb der Austrittsöffnung 83 des Auslasses 82 in der Bohrung 56 druckdicht an, so daß, sollte sich ein Druck in der Kammer 53 und in dem Hohlraum 58 aufbauen, dieser sich so lange nicht über die Längsnuten 60 und die Dichtringe 62, 64 zum Auslaß 82 abbauen kann, so lange der Ventilkolben 57 die in Fig. 2 dargestellte Schließstellung eingenommen hat. Steigt der Druck in der Kammer 53 und dem Hohlraum 58 an, so wird nach Überwindung der Reibungskraft zwischen der Bohrung 56 und den Dichtringen 62, 64 und nach Überwindung der Vorspannkraft der Spiralfeder 66 der Ventilkolben 57 gemäß Fig. 3 nach oben in Richtung X so lange bewegt, bis sowohl der Dichtring 64 den Auslaß 82 nach oben als auch der Dichtring 62 die Austrittsöffnung 83 teilweise oder ganz nach oben überfahren haben.

In der in Fig. 3 gezeigten Offenstellung des Überdruckventils 84 strömt dann also vorzugsweise Wasser über die Längsnuten 60 vorbei am Dichtring 62 zum Auslaß 82, wie dies die Pfeile 85 in Fig. 3 andeuten. Der Auslaß 82 kann über eine in der Zeichnung nicht dargestellte Rücklaufleitung wiederum mit dem Wassertank 2 in Verbindung stehen, so daß Kondensat nicht am Gerät seitlich unkontrolliert abfließt. In Fig. 3 ist die maximale Offenstellung des Überdruckventils 84 dargestellt, da hier die am Ventilkolben 57 ausgebildete Stirnfläche 86 an der Innenseite 68 des Deckels 67 anschlägt.

Wie Fig. 1 noch zeigt, sind am freien Ende 70 der Wand 71 des Zwischentanks 5 zwei in Längsrichtung 81 verlaufende und gegenüberliegend angeordnete Kulissen 87, 88 ausgebildet, die in entsprechende Nuten des Gehäuses (nicht dargestellt) einer Dampferzeugungseinrichtung 1 oder einer Brühgetränkezubereitungsmaschine (nicht dargestellt) eingreifen, um so den Zwischentank 5 ortsfest im Gehäuse des Gerätes zu halten. Entsprechende Haltevorrichtungen sind ebenfalls am Wassertank 2 an der Pumpe 3, am Durchlauferhitzer 6, am Zweiwegeventil 45 und am Schalter 32 ausgebildet, die aber in der Zeichnung nicht dargestellt sind und die mit entsprechenden Halteeinrichtungen im Gerät korrespondieren. Die Anordnung der in Fig. 1 dargestellten Teile sind in einem Haushaltsgerät, vorzugsweise in einer Espresso- oder Kaffeemaschine, nicht so angeordnet, wie dies Fig. 1 zeigt, sondern diese Teile können räumlich weiter oder näher voneinander entfernt und auch in anderer Einbaulage - mit Ausnahme des Wassertanks 2 und des Zwischentanks 5 - angeordnet sein. Wichtig ist nämlich, daß der Wassertank 2 und der Zwischentank 5 entsprechend Fig. 1 senkrecht angeordnet sind, damit kein Wasser ausläuft.

Die Wirkungsweise der erfindungsgemäßen Dampferzeugungseinrichtung 1 ist folgende:

Zunächst wird der Wassertank 2 mittels der Handhabe 50 von der Wasserleitung 8 getrennt und an einer Wasserentnahmestelle mit Trinkwasser gefüllt. Anschließend wird der Wassertank 2 mit seinem Auslaß (nicht dargestellt) an die Wasserleitung 8 angeschlossen, wobei ein im Auslaß ausgebildetes Ventil (nicht dargestellt) geöffnet wird und Wasser zum Eingangsanschluß 9 der Pumpe 3 strömt. Wird nun der elektrische Schalter 32 in seine Einschaltstellung gebracht, so werden die Pumpe 3 gleichzeitig über die Leitungen 31, 25, 33 und die Heizung 22 des Durchlauferhitzers 6 über die Leitungen 31, 26 und 25 mit elektrischer Energie versorgt. Bei der Heizung 22 trifft dies nur zu, wenn der Thermoschalter 27 geschlossen ist, d.h., der Durchlauferhitzer 6 kalt ist, so daß die Leitung 31 mit der Leitung 26 verbunden ist.

Der Elektromotor 35 läuft an, so daß sich die Antriebswelle 36 und somit das erste Zahnrad 37 dreht. Über die Zahnräder 38, 39 und 40 wird die Lagerstelle 41 in Drehung gebracht, so daß sich die hiermit verbundene Pleuelstange 42 und der Kolben (nicht dargestellt) in dem Kolbengehäuse 43 auf- und abbewegen. Bei der Abwärtsbewegung des Kolbens der Pumpe 3 öffnet sich das im Eingangsanschluß 9 ausgebildete Saugventil (nicht dargestellt), so daß Flüssigkeit in den Raum des Ventilgehäuses 44 gelangt. Bei der Aufwärtsbewegung des Kolbens der Pumpe 3 schließt nun das Saugventil und es öffnet gleichzeitig das Druckventil (nicht dargestellt) am Ausgangsanschluß 10. Wasser wird auf diese Weise bei wiederholten Hüben über den ersten Leitungsabschnitt 11 in das Ventil 45 gefördert, von wo es über den zweiten Leitungsabschnitt 11b und über den Einlaß 15 in die Kammer 53 des Zwischentanks 5 gelangt. Je mehr Hübe die Pumpe 3 macht, desto mehr Wasser fließt in die Kammer 53.

Gleichzeitig beim Einschalten des Schalters 32, der mechanisch mit dem Zweiwegeventil 45 verbunden ist, beginnt nach Fig. 1 die Heizung 22 das Dampfrohr 18 zu erwärmen. In dem Moment, wo das von der Pumpe 3 geförderte Wasser so weit in der Kammer 53 angestiegen ist, bis es die Höhe H des Kammerauslasses 54 erreicht hat, läuft das überschüssige Wasser über das Rohr 52 und den zweiten Abschnitt 17 der Leitung 13 in den Dampfeingang 19 des Dampfrohres 18 hinein, wo es nun verdampft wird. Die sofortige Verdampfung ist nur deshalb möglich, weil die Zeit, die zum Auffüllen der Kammer 53 bis zur Füllhöhe H benötigt wurde, gerade ausgereicht hat, den Durchlauferhitzer 6 so weit zu erwärmen, daß er nun einströmendes Wasser sofort verdampfen kann.

Das verdampfte Wasser tritt nach Fig. 1 am Dampfausgang 20 in die Dampfleitung 21 ein, wo es an ihrem Ende der Dampfdüse 7 zugeführt wird. In der Dampfdüse 7 wird die Geschwindigkeit des Dampfes erheblich erhöht und gleichzeitig wird von der Seite her Luft angesaugt, die, wenn die Dampfdüse 7 in einen Behälter mit Milch eingetaucht wird, die Milch einerseits erwärmt und andererseits mit Luft durchsetzt, so daß sich die Milch aufschäumt. Dieser Vorgang läuft nun so lange, bis die Milch ausreichend heiß und genügend aufgeschäumt ist.

Nun wird das Zweiwegeventil 45 von Hand über einen nicht dargestellten Betätigungsknopf in die Nullstellung gebracht, so daß gleichzeitig der Schalter 32 über die mechanische Verbindung 46 ausgeschaltet wird. Beim Umschalten des Zweiwegeventils in die Nullstellung wird der Leitungsabschnitt 11a zum Leitungsabschnitt 11b versperrt und gleichzeitig wird die Leitung 11b zur Entspannungsleitung 47 freigegeben. Dadurch, daß nun kein Wasser mehr über den zweiten Abschnitt 17 in das Dampfrohr 18 strömt, jedoch noch ausreichend Dampf sich im Dampfrohr 18 befindet und gleichzeitig die Dampfdüse 7 eine Drossel darstellt, drückt nun der im Dampfrohr 18 noch befindliche Dampf über die Leitung 17 in die Kammer 53 hinein, wo das dort befindliche Wasser über den Leitungsabschnitt 11b, das Zweiwegeventil 45 zur Leitung 47 gedrückt wird, das dann an dem Ende 48 in den Wassertank 2 zurückströmt.

Damit nach den Figuren 1 bis 3 der in die Kammer 53 zurückströmende Dampf nicht gleich im Wasser und an den Wänden der Kammer 53 - daher sind der Zwischentank 5 und der Ventilkolben 57 aus nur wenig Wärmeenergie speicherndem Kunststoff ausgebildet - kondensiert und somit nicht mehr ausreichend lange Druck für die Zurückführung des Wassers aus der Kammer 53 des Zwischentanks 5 vorhanden wäre, dient vorzugsweise der im Ventilkolben 57 ausgebildete Hohlraum 58. Dieser Hohlraum 58 nimmt nämlich den aus dem Kammeranschluß 54 des Rohres 52 zurückfließenden Dampf auf, ohne dabei selbst wesentlichen Wärme zu verlieren und zu kondensieren. Auf diese Weise steht also noch genügend lang Druck in der Kammer 58 zur Verfügung, die ausreicht, das Wasser aus der Kammer 53 zu verdrängen und in den Wassertank 2 zurückzuführen. Auf diese Weise wird der Zwischentank 5 nach Beendigung der Dampferzeugung entleert und es kann der bereits zuvor beschriebene Verfahrensprozeß erneut beginnen. Der Wassertank 2 kann nach Rückführung des Wassers von Hand entleert werden.

Das Überdruckventil 84 nach den Figuren 2 und 3 dient dazu, daß, wenn beispielsweise durch zu hohe Verkalkung im Dampfrohr 18 oder aufgrund einer Verstopfung der Dampfdüse 7 oder der Dampfleitung, der Druck in der Kammer 53 immer mehr ansteigt, dieser abgeregelt wird. Wenn also die auf den Ventilkolben 57 einwirkende Kraft zunimmt, bewegt sich der Ventilkolben 57 gemäß Figuren 2 und 3 nach Überwindung der Reibungskräfte zwischen den Dichtungen 62, 64 und der Bohrung 56 sowie nach der Überwindung der Vorspannkraft der Feder 66 in der Bohrung 56 nach oben. Dabei überfährt zunächst die Dichtung 64 den Auslaß 82 und bei weiterer Verschiebung des Ventilkolbens 57 in Richtung X nach oben überfährt teilweise bzw. ganz der Dichtring 62 den Auslaß 82, so daß Dampf aus der Kammer 53 über die Längsnuten 60 und vorbei am Dichtring 62 in den Auslaß 82 treten kann, wie dies in Fig. 3 angezeigt wird. Auf diese Weise wird vermieden, daß die Teile der Dampferzeugungseinrichtung 1 nicht unnötig hoch durch den ansteigenden Druck belastet bzw. beschädigt werden.

Der zweite Dichtring 64 dient insbesondere dafür, daß in der Offenstellung des Überdruckventils 84 gemäß Fig. 3 nicht auch Wasser und eventuell auch Dampf aus dem Ringraum 91 in den zwischen der Endfläche 86 des Ventilkolbens 57 und dem Deckel 67 gebildeten Raum 90 einströmt. Nach erfolgtem Druckabbau in der Kammer 53 wird der Ventilkolben 57 durch die Kraft der Feder 66 wieder in seine in Fig. 2 dargestellte Schließstellung gebracht, wenn die Kraft des Ventilkolbens 57, die aufgrund des Druckes in der Kammer 53 entsteht, kleiner ist, als die Kraft der Spiralfeder 66, die von der anderen Seite auf den Ventilkolben 57 einwirkt. Reibungskräfte an den Dichtungen 62, 64 seien dabei vernachlässigt.

Es wird noch erwähnt, daß für eine Bedienungsperson nach Einschalten der Dampferzeugungseinrichtung 1 zwar eine gewisse Zeit verstreicht, bis Dampf an der Dampfdüse 7 austritt, diese Verzögerungszeit ist aber akzeptabel, da die Pumpe 3 bereits eingeschaltet ist und von einer Bedienungsperson akustisch derart wahrgenommen wird, daß sie weiß, daß die Dampferzeugungseinrichtung 1 arbeitet und in Kürze Dampf liefern wird. Würde man hingegen, wie dies aus dem Stand der Technik bekannt ist, die Pumpe 3 erst dann anlaufen lassen, wenn der Durchlauferhitzer 6 seine Betriebstemperatur erreicht hat, so müßte am Gerät eine Anzeige vorhanden sein, daß das Gerät noch nicht betriebsbereit ist bzw. vorgewärmt wird. Anhand der bereits laufenden Pumpe 3 nach der Erfindung und der dabei abgegebenen Geräusche können derartige kostenaufwendige Maßnahmen eingespart werden.

Zur eventuellen Reinigung des Zwischentanks 5 in einer Servicewerkstatt kann der Deckel 67 durch Lösen der Haltearme 73, 74 von den Rastnasen 75, 76 von dem zylindrischen Gehäuse 55 entfernt werden. Anschließend kann der Ventilkolben 57 aus der Bohrung 56 mit samt der Feder 66 herausgezogen werden und beispielsweise die Dichtungen 62, 64 ersetzt oder sonstige Wartungsmaßnahmen, wie Einfetten der Bohrung 56 und des Ventilkolbens 57 vorgenommen werden.

## Patentansprüche

1. Dampferzeugungseinrichtung (1) zum Aufwärmen und/oder Aufschäumen von Flüssigkeiten, insbesondere Milch, mit einer von einer Wasserquelle (2) mit Wasser gespeisten, elektrisch angetriebenen Pumpe (3) und mit einem über eine Leitung (13) an die Pumpe (3) angeschlossenen, von einer elektrisch betriebenen Heizung (22) beheizten Dampfrohr (18) eines Durchlauferhitzers (6), der seinerseits mit einer Dampfentnahmestelle, vorzugsweise einer Dampfdüse (7), verbunden ist,
**dadurch gekennzeichnet,**
daß in der Leitung (13) zwischen der Pumpe (3) und dem Dampfrohr (18) ein eine bestimmte Menge an Wasser speichernder Zwischentank (5) mit einer Überlaufkammer (53) ausgebildet ist

2. Dampferzeugungseinrichtung nach Anspruch 1,
**dadurch gekennzeichnet,**
daß die Überlaufkammer (53) einen Einlauf (15) und einen Auslauf (16) aufweist und
daß der Einlauf (15) über einen ersten Abschnitt (11a, 11b) der Leitung (13) mit dem Auslauf (10) der Pumpe (3) und der Auslauf (16) über einen zweiten Abschnitt (17) der Leitung (13) mit dem Einlauf des Dampfrohres (18) des Durchlauferhitzers (6) verbunden sind.

3. Dampferzeugungseinrichtung nach Anspruch 2,
**dadurch gekennzeichnet,**
daß der Auslauf (54) der Kammer (53) in Richtung der Längsachse (81) des Zwischentanks (5) oberhalb des Einlaufs (15) in der Kammer (53) des Zwischentanks (5) ausgebildet ist.

4. Dampferzeugungseinrichtung nach Anspruch 1,
**dadurch gekennzeichnet,**
daß der Zwischentank (5) einen Auslaß (81) zur Atmosphäre aufweist, der von einem vom Druck in der Kammer (53) gesteuerten Überdruckventil (84) steuerbar ist.

5. Dampferzeugungseinrichtung nach Anspruch 4,
**dadurch gekennzeichnet,**
daß sich an die Kammer (53) des Zwischentanks (5) oberhalb des maximalen Füllstandes (89) ein Druckraum (58) anschließt, daß der Druckraum (58) von einer Sacklochbohrung gebildet ist, daß in die den Druckraum (58) begrenzenden Wand der als Kanal ausgebildete Auslaß (81) einmündet und daß das Überdruckventil (84) einerseits von einem gegen die Kraft einer Feder (66) verschiebbaren Ventilkolben (57) und andererseits von dem Auslaß (81) gebildet ist.

6. Dampferzeugungseinrichtung nach Anspruch 5,
**dadurch gekennzeichnet,**
daß der Ventilkolben (57) auf seiner der Kammer (53) zugewandten Seite einen als Vertiefung ausgebildeten Hohlraum (58) aufweist.

7. Verfahren für eine Dampferzeugungseinrichtung (1) zum Aufwärmen und/oder Aufschäumen von Flüssigkeiten, insbesondere Milch, mit einer von einer Wasserquelle (2) mit Wasser gespeisten, elektrisch angetriebenen Pumpe (3), von der über eine Leitung (13) dosiert Wasser einem von einer elektrisch betriebenen Heizung (22) beheizten Dampfrohr (18) eines Durchlauferhitzers (6) zugeführt wird, der seinerseits das ankommende Wasser zu Dampf erhitzt, welches anschließend einer Dampfentnahmestelle, vorzugsweise einer Dampfdüse (7), zugeführt wird, wo der Dampf unter Druck austritt,
**dadurch gekennzeichnet,**
daß in der Leitung (13) zwischen der Pumpe (3) und dem Dampfrohr (18) ein eine bestimmte Menge an Wasser speichernder Zwischentank (5) mit einer Überlaufkammer (53) ausgebildet ist, daß beim Einschalten der Dampferzeugungseinrichtung (1) die Pumpe (3) gleichzeitig mit der Heizung (22) eingeschaltet wird und daß nach dem Einschalten das von der Pumpe (3) geförderte Wasser in die Kammer (53) des Zwischentanks (5) einfließt und dort so lange zurückgehalten und erst dann an das Dampfrohr (18) abgegeben wird, bis das Dampfrohr (18) eine Temperatur erreicht hat, die ausreicht, Wasser zu verdampfen.

8. Verfahren nach Anspruch 7,
**dadurch gekennzeichnet,**
daß sich an die Kammer (53) des Zwischentanks (5) oberhalb des maximalen Füllstandes (89) ein Druckraum (58) anschließt, daß der Druckraum (58) von einer Sacklochbohrung gebildet ist, daß in die den Druckraum (58) begrenzenden Wand der als Kanal ausgebildete Auslaß (81) einmündet, daß das Überdruckventil (84) einerseits von einem gegen die Kraft einer Feder (66) verschiebbaren Ventilkolben (57) und andererseits von dem Auslaß (81) gebildet ist, wobei der Ventilkolben (57) im normalen Dampfbetrieb die Austrittsöffnung (83) verschließt und bei erhöhtem Überdruck in der Kammer (53) derart gegen die Kraft der Feder (66) verschoben wird, daß er die Austrittsöffnung (83) zur Kammer (53) freigibt.
